# EUROPEAN PATENT APPLICATION

(11) **EP 1 531 478 A1**
(43) Date of publication of application: **18.05.2005**
(21) Application number: 03026046.7
(22) Date of filing: 12.11.2003
(51) Int. Cl.: G11B 27/28, G10L 15/26, G10L 11/02

(54) **Apparatus and method for classifying an audio signal**

(71) Applicant: Sony International (Europe) GmbH, 10785 Berlin (DE)
(72) Inventor: Goronzy, Silke Sony International (Europe) GmbH, 70327 Stuttgart (DE); Kemp, Thomas Sony International (Europe) GmbH, 70327 Stuttgart (DE); Kompe, Ralf Sony International (Europe) GmbH, 70327 Stuttgart (DE); Lam, Yin Hay Sony International (Europe) GmbH, 70327 Stuttgart (DE); Tato, Raquel Sony International (Europe) GmbH, 70327 Stuttgart (DE); Marasek, Krzysztof Sony Int'l. (Europe) GmbH, 70327 Stuttgart (DE)
(74) Representative: Körber, Martin, Dipl.-Phys.

(57) **Abstract**

An apparatus for classifying audio signals (1) comprises audio signal clipping means (2) for partitioning audio signals (11) into audio clips, and class discrimination means (3) for discriminating the audio clips provided by the audio signal clipping means (2) into predetermined audio classes based on predetermined audio class classifying rules (35,36,37) by analysing acoustic characteristics of the audio signals (11) comprised in the audio clips, wherein a predetermined audio class classifying rule is provided for each audio class, and each audio class represents a respective kind of audio signals comprised in the corresponding audio clip.

Audio signals (1) are classified by class discrimination means (3) calculating an audio class confidence value for each audio class assigned to an audio clip, wherein the audio class confidence value indicates the likelihood the respective audio class characterises the respective kind of audio signals comprised in the respective audio clip correctly. Furthermore, the class discrimination means (3) use acoustic characteristics of audio clips of audio classes having a high audio class confidence value to train the respective audio class classifying rule (35,36,37).

## Description

The present invention relates to an apparatus and method for classifying an audio signal comprising the features of the preambles of independent claims 1 and 13, respectively.

There is a growing amount of video data (comprising sampled video signals) available on the Internet and in a variety of storage media e.g. digital video discs. Furthermore, said video data is provided by a huge number of telestations as an analog or digital video signal.

The video data is a rich multilateral information source containing speech, audio, text, colour patterns and shape of imaged objects and motion of these objects.

Currently, there is a desire for the possibility to search for segments of interest (e.g. certain topics, persons, events or plots etc.) in said video data.

In principle, any video signal can be primarily classified with respect to its general subject matter. The general subject matter frequently is referred to as "category".

If the video signal is a tv-broadcast, said general subject matter (category) might be news or sports or movie or documentary film, for example

In the present document, a self-contained video signal belonging to one general subject matter (category) is referred to as "programme".

For example, each single telecast, each single feature film, each single newsmagazine and each single radio drama is referred to as programme.

Usually each programme contains a plurality of self-contained activities (events). In this regard, only self-contained activities (events) having a certain minimum importance are accounted for.

If the general subject matter (category) is news and the programme is a certain newsmagazine, for example, the self-contained activities might be the different notices mentioned in said newsmagazine. If the general subject matter (category) is sports and the programme is a certain football match, for example, said self-contained activities might be kick-off, penalty kick, throw-in etc..

In the following, said self-contained activities (events) which are included in a certain programme and meet a minimum importance are called "contents".

Thus, each video signal firstly is classified with respect to its category (general subject matter).

Within each category the video signal is classified with respect to its programme (self-contained video signal belonging to one category).

The programmes are further classified with respect to its respective contents (self-contained activities (important events)).

The traditional video tape recorder sample playback mode for browsing and skimming an analog video signal is cumbersome and inflexible. The reason for this problem is that the video signal is treated as a linear block of samples. No searching functionality (except fast forward and fast reverse) is provided.

To address this problem some modem video tape recorder comprise the possibility to set indexes either manually or automatically each time a recording operation is started to allow automatic recognition of certain sequences of video signals. It is a disadvantage with said indexes that the indexes are not adapted to individually identify a certain sequence of video signals.

On the other hand, digital video discs comprise video data (digitised video signals), wherein chapters are added to the video data during the production of the digital video disc. Said chapters normally allow identification of the story line, only. Especially, said chapters do not allow identification of certain contents (self-contained activities / events having a certain minimum importance) comprised in the video data.

Moreover, during the last years electronic program guide (EPG) systems have been developed.

An electronic program guide (EPG) is an application used with digital set-top-boxes and newer television sets to list current and scheduled programs that are or will be available on each channel and a short summary or commentary for each program. EPG is the electronic equivalent of a printed television programme guide.

Usually, an EPG is accessed using a remote control device. Menus are provided that allow the user to view a list of programmes scheduled for the next few hours up to the next seven days. A typical EPG includes options to set parental controls, order pay-per-view programming, search for programmes based on theme or category, and set up a VCR to record programmes. Each digital television (DTV) provider offers its own user interface and content for its EPG. Up to know the format of the EPG is highly depending on the respective provider. The standards developed so far (e.g. the MHP-standard) still are not yet enforced.

Thus, video data suitable for EPG usually is composed of an audio signal, a picture signal and an information signal. Although EPG allows identification of programmes and of the general subject matter (category) the respective programmes belong to, EPG does not allow identification of certain contents included in the respective programmes.

It is a disadvantage with EPG that the information provided by the EPG still has to be generated manually by the provider of the EPG. As said before, this is very sumptuously and thus costly. Furthermore, typical EPG information comprises information about the content of a film as a whole, only. A further subdivision of the respective film into individual contents (self-contained activities / plots) is not provided.

An obvious solution for the problem of handling large amounts of video signals would be to manually segment the video signals of each programme into segments according to its contents and to provide a detailed information with respect to the video signal included in said segments.

Due to the immense amount of video sequences comprised in the available video signals, manual segmentation is extremely time-consuming and thus expensive. Therefore, this approach is not practicable to process a huge amount of video signals.

To solve the above problem approaches for automatic segmentation of video signals have been recently proposed.

Possible application areas for such an automatic segmentation of video signals are digital video libraries or the Internet, for example.

Since video signals are composed of at least a picture signal and one or several audio signals an automatic video segmentation process could either rely on an analysis of the picture signal or the audio signals or on both.

In the following, a segmentation process which is focused on analysis of the audio signal of video signals is further discussed.

It is evident that this approach is not limited to the audio signal of video signals but might be used for any kind of audio signals except physical noise. Furthermore, the general considerations can be applied to other types of signals, e.g. analysis of the picture signal of video signals, too.

The known approaches for the segmentation process comprise clipping, automatic classification and automatic segmentation of the audio signals contained in the video signals.

"Clipping" is performed to partition the audio signals (and corresponding video signals) into audio clips (and corresponding video clips) of a suitable length for further processing. The audio clips comprise a suitable amount of audio signals, each. Thus, the accuracy of the segmentation process is depending on the length of said audio clips.

"Classification" stands for a raw discrimination of the audio signals with respect to the origin of the audio signals (e.g. speech, music, noise, silence and gender of speaker). Classification usually is performed by signal analysis techniques based on audio class classifying rules. Thus, classification results in a sequence of audio signals which are partitioned with respect to the origin of the audio signals.

"Segmentation" stands for segmenting the audio signals (video signals) into individual sequences of cohesive audio clips wherein each sequence contains a content (self-contained activity of a minimum importance) included in the audio signals (video signals) of said sequence. Segmentation usually is performed based on content classifying rules.

Each content comprises all the audio clips which belong to the respective self-contained activity / important event comprised in the audio signal (e.g. a goal, a penalty kick of a football match or different news during a news magazine).

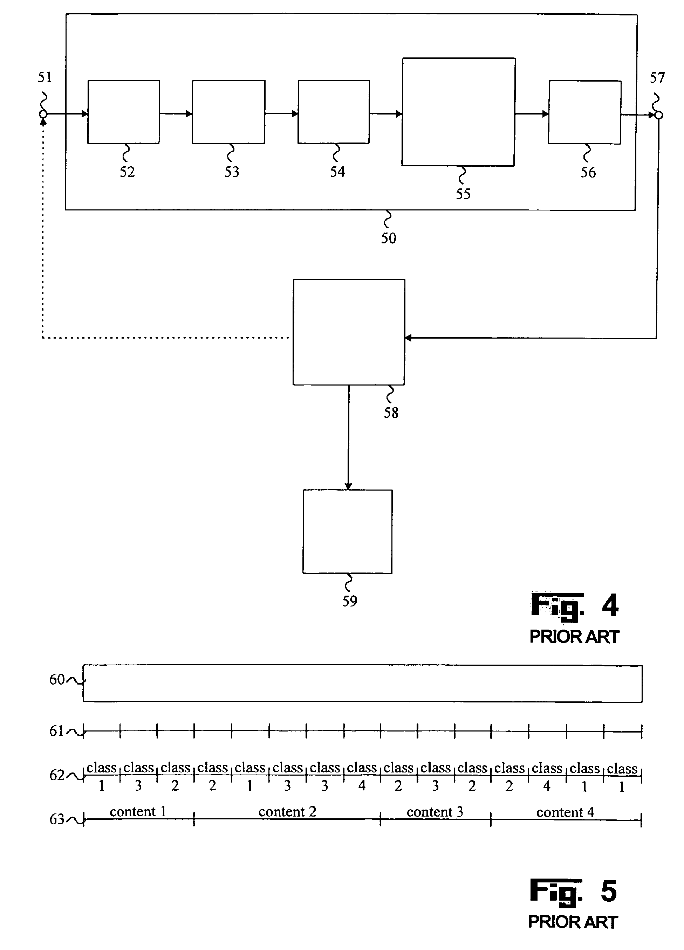

A segmentation apparatus 50 for automatic segmentation of audio signals according to the prior art is shown in Fig. 4.

The effect of said segmentation apparatus 50 on an audio signal 60 is shown in Fig. 5.

The segmentation apparatus 50 comprises audio signal input means 52 for supplying a raw audio signal 60 via an audio signal entry port 51.

In the present example, said raw audio signal 60 is part of a video signal stored in a suitable video format in a hard disc 58.

Alternatively, said raw audio signal might be a real time signal (e.g. an audio signal of a conventional television channel), for example.

The audio signals 60 supplied by the audio signal input means 52 are transmitted to audio signal clipping means 53. The audio signal clipping means 53 partition the audio signals 60 (and the respective video signals) into audio clips 61 (and corresponding video clips) of a predetermined length.

The audio clips 61 generated by the audio signal clipping means 53 are further transmitted to class discrimination means 54.

The class discrimination means 54 discriminates the audio clips 61 into predetermined audio classes 62 based on predetermined audio class classifying rules by analysing acoustic characteristics of the audio signal 60 comprised in the audio clips 61, whereby each audio class identifies a kind of audio signals included in the respective audio clip. In this respect, the term "rule" defines any instruction or provision which allows automatic classification of the audio clips 61 into audio classes 62.

Each of the audio class classifying rules allocates a combination of certain acoustic characteristics of an audio signal to a certain kind of audio signal.

Here, the acoustic characteristics for the audio class classifying rule identifying the kind of audio signals "silence" are "low energy level" and "low zero cross rate" of the audio signal comprised in the respective audio clip, for example.

In the present example an audio class and a corresponding audio class classifying rule for each silence (class 1), speech (class 2), cheering/clapping (class 3) and music (class 4) are provided.

Said audio class classifying rules are stored in the class discrimination means 54.

The audio clips 61 discriminated into audio classes 62 by the class discrimination means 54 are supplied to segmenting means 55.

A plurality of predetermined content classifying rules are stored in the segmenting means 55. Each content classifying rule allocates a certain sequence of audio classes of consecutive audio clips to a certain content.

In the present example a content classifying rule for each a "free kick" (content 1), a "goal" (content 2), a "foul" (content 3) and "end of game" (content 4) are provided.

It is evident that the contents comprised in the audio signals are composed of a sequence of consecutive audio clips, each. This is shown by element 63 of Fig. 5.

Since each audio clip can be discriminated into an audio class each content comprised in the audio signals is composed of a sequence of corresponding audio classes of consecutive audio clips, too.

Therefore, by comparing a certain sequence of audio classes of consecutive audio clips which belongs to the audio signals with the sequences of audio classes of consecutive audio clips which belong to the content classifying rules the segmenting means 55 detects a rule which meets the respective sequence of audio classes.

In consequence, the content allocated to said rule is allocated to the respective sequence of consecutive audio clips which belongs to the audio signals.

Thus, based on said content classifying rules the segmenting means 55 segments the classified audio signals provided by the discrimination means 54 into a sequence of contents 63 (self-contained activities).

In the present example, an output file generation means 56 is used to generate an video output file containing the audio signals 60, the corresponding video signals and information regarding the corresponding sequence of contents 63.

Said output file is stored via a signal output port 57 into a hard disc 58.

By using a video playback apparatus 59 the video output files stored in the hard disc 58 can be played back.

In the present example, the video playback apparatus 59 is a digital video recorder which is further capable to extract or select individual contents comprised in the video output file based on the information regarding the sequence of contents 63 comprised in the video output file.

Thus, segmentation of audio signals with respect to its contents is performed by the segmentation apparatus 50 shown in Fig. 4.

A stochastic signal model frequently used with classification of audio data is the HIDDEN MARKOV MODEL which is explained in detail in the essay "A Tutorial on Hidden Markov Models and Selected Applications in Speech Recognition" by Lawrence R. RABINER published in the Proceedings of the IEEE, Vol. 77, No.2, February 1989.

Different approaches for audio-classification-segmentation with respect to speech, music, silence and gender are disclosed in the paper "Speech/Music/Silence and Gender Detection Algorithm" of Hadi HARB, Liming CHEN and Jean-Yves AULOGE published by the Lab. ICTT Dept. Mathematiques - Informatiques, ECOLE CENTRALE DE LYON. 36, avenue Guy de Collongue B.P. 163, 69131 ECULLY Cedex, France.

In general, the above paper is directed to discrimination of an audio channel into speech/music/silence/and noise which helps improving scene segmentation. Four approaches for audio class discrimination are proposed: A "model-based approach" where models for each audio class are created, the models being based on low level features of the audio data such as cepstrum and MFCC. A "metric-based segmentation approach" uses distances between neighbouring windows for segmentation. A "rule-based approach" comprises creation of individual rules for each class wherein the rules are based on high and low level features. Finally, a "decoder-based approach" uses the hidden Makrov model of a speech recognition system wherein the hidden Makrov model is trained to give the class of an audio signal.

Furthermore, this paper describes in detail speech, music and silence properties to allow generation of rules describing each class according to the "rule based approach" as well as gender detection to detect the gender of a speech signal.

"Audio Feature Extraction and Analysis for Scene Segmentation and Classification" is disclosed by Zhu LIU and Yao WANG of the Polytechnic University Brooklyn, USA together with Tsuhan CHEN of the Carnegie Mellon University, Pittsburg, USA. This paper describes the use of associated audio information for video scene analysis of video data to discriminate five types of TV programs, namely commercials, basketball games, football games, news report and weather forecast.

According to this paper the audio data is divided into a plurality of clips, each clip comprising a plurality of frames.

A set of low level audio features comprising analysis of volume contour, pitch contour and frequency domain features as bandwidth are proposed for classification of the audio data contained in each clip.

Using a clustering analysis, the linear separability of different classes is examined to separate the video sequence into the above five types of TV programs.

Three layers of audio understanding are discriminated in this paper: In a "low-level acoustic characteristics layer" low level generic features such as loudness, pitch period and bandwidth of an audio signal are analysed. In an "intermediate-level acoustic signature layer" the object that produces a particular sound is determined by comparing the respective acoustic signal with signatures stored in a database. In a "high level semantic-model" some a prior known semantic rules about the structure of audio in different scene types (e.g. only speech in news reports and weather forecasts, but speech with noisy background in commercials) are used.

To segment the audio data into audio meta patterns sequences of audio classes of consecutive audio clips are used.

To further enhance accuracy of the above described method, it is proposed to combine the analysis of the audio data of video data with an analysis of the visual information comprised in the video data (e.g. the respective colour patterns and shape of imaged objects).

The patent US 6,185,527 discloses a system and method for indexing an audio stream for subsequent information retrieval and for skimming, gisting and summarising the audio stream. The system and method includes use of special audio prefiltering such that only relevant speech segments that are generated by a speech recognition engine are indexed. Specific indexing features are disclosed that improve the precision and recall of an information retrieval system used after indexing for word spotting. The described method includes rendering the audio stream into intervals, with each interval including one or more segments. For each segment of an interval it is determined whether the segment exhibits one or more predetermined audio features such as a particular range of zero crossing rates, a particular range of energy, and a particular range of spectral energy concentration. The audio features are heuristically determined to represent respective audio events, including silence, music, speech, and speech on music. Also, it is determined whether a group of intervals matches a heuristically predefined meta pattern such as continuous uninterrupted speech, concluding ideas, hesitations and emphasis in speech, and so on, and the audio stream is then indexed based on the interval classification and meta pattern matching, with only relevant features being indexed to improve subsequent precision of information retrieval. Also, alternatives for longer terms generated by the speech recognition engine are indexed along with respective weights, to improve subsequent recall.

Thus, it is inter alia proposed to automatically provide a summary of an audio stream or to gain an understanding of the gist of an audio stream.

Algorithms which generate indices from automatic acoustic segmentation are described in the essay "Acoustic Segmentation for Audio Browsers" by Don KIMBER and Lynn WILCOX. These algorithms use hidden Markov models to segment audio into segments corresponding to different speakers or acoustic classes. Types of proposed acoustic classes include speech, silence, laughter, non-speech sounds and garbage, wherein garbage is defined as non-speech sound not explicitly modelled by the other class models.

An implementation of the known methods is proposed by George TZANETAKIS and Perry COOK in the essay "MARSYAS: A framework for audio analysis" wherein a client-server architecture is used.

Although the class discrimination means of known segmentation apparatus achieve a good average performance it is a disadvantage that said class discrimination means often fails when applied to video signals belonging to a specific category.

In fact, the known class discrimination means frequently fail when applied to video signals belonging to a specific programme of a respective category.

This is further explained by the following example:

Although the known class discrimination means might achieve average results when classifying audio signals regarding the categories "sports", "movies" and "documentary film", the same class discrimination means might perform below average when classifying audio signals which belong to the category "news".

Correspondingly, although the known class discrimination means might achieve good results when classifying audio signals regarding the programmes "football", "handball", and "baseball" (which all belong to the category "sports"), the same class discrimination means might perform below average when classifying audio signals regarding the programme "golf" (which belongs to the category "sports", too).

Furthermore, the above disadvantages apply to segmenting means of known segmentation apparatus, too:

On the one hand the segmenting means of known segmentation apparatus usually achieve a good average performance.

On the other hand, said segmenting means frequently fail when applied to video signals belonging to a specific category or to a specific programme of a respective category.

The above example which was given with respect to the class discrimination means correspondingly applies to the segmenting means.

Moreover, when segmenting audio signals into contents it is a crucial problem that a certain sequence of audio classes of consecutive audio clips usually can be allocated to a variety of contents.

For example, the consecutive sequence of audio classes of consecutive audio clips for the content "goal" in the programme "football" might be "speech"-"silence"-"noise"-"speech" and the consecutive sequence of audio classes of consecutive audio clips for the content "notice" in the programme "newsmagazine" might be "speech"-"silence"-"noise"-"speech", too. Thus, in the present example no unequivocal allocation of a corresponding content can be performed.

To solve the above problem, known segmenting means of prior art segmentation apparatus usually employ a rule based approach for the allocation of contents to a certain sequence of audio classes of consecutive audio clips.

The determination process to find acceptable audio class classifying rules / content classifying rules for each audio class / each content according to the prior art is depending on both the used raw audio signals and the personal experience of the person conducting the determination process. Thus, the determination process usually is very difficult, time consuming and subjective.

Furthermore, there is a high risk that not all possible peculiarities of the different programmes and the different categories the audio signals might belong to is sufficiently accounted for.

It is the object of the present invention to overcome the above cited disadvantages and to provide an apparatus and a method for classifying audio signals which provide a good average performance independent on the category or programme the supplied audio signals belong to.

The above object is solved in an apparatus for classifying audio signals comprising the features of the preamble of independent claim 1 by the features of the characterising part of claim 1.

Furthermore, the above object is solved with a method for classifying audio signals comprising the features of the preamble of independent claim 13 by the features of the characterising part of claim 13.

Further developments are set forth in the dependent claims.

An apparatus for classifying audio signals comprises audio signal clipping means for partitioning audio signals into audio clips and class discrimination means for discriminating the audio clips provided by the audio signal clipping means into predetermined audio classes based on predetermined audio class classifying rules by analysing acoustic characteristics of the audio signals comprised in the audio clips, wherein a predetermined audio class classifying rule is provided for each audio class, and each audio class represents a respective kind of audio signals comprised in the corresponding audio clip.

According to the present invention the class discrimination means calculates an audio class confidence value for each audio class assigned to an audio clip, wherein the audio class confidence value indicates the likelihood the respective audio class characterises the respective kind of audio signals comprised in the respective audio clip correctly. Furthermore, the class discrimination means uses acoustic characteristics of audio clips of audio classes having a high audio class confidence value to train the respective audio class classifying rule.

It is important to emphasise that the audio signal clipping means do not have to subdivide the audio signals into audio clips of a predetermined length but to define segments of audio signals comprising a suitable amount of audio signals within the audio signals, only. Said segments of audio signals are referred to as "audio clips".

Thus, the audio signal clipping means might generate a meta data file defining said segments of audio signals while the audio signal itself remains unamended.

The present invention bases on the use of audio class classifying rules allocating a certain combination of given acoustic characteristics to a certain kind of audio signals. Said kind of audio signal is called "audio class".

According to the present invention an audio class confidence value is calculated for each audio clip which discriminated into an audio class by the class discrimination means.

Since the discrimination of audio clips into audio classes is performed by using audio class classifying rules, said audio class confidence value can be calculated for each audio class classifying rule with respect to each audio clip.

A simple way for calculating said audio class confidence value would be to determine the proportion of parameters of each audio class classifying rule met by the respective audio signal of the respective audio clip, for example.

Said audio class confidence value indicates the probability of a correct discrimination of an audio clip into an audio class.

Thus, audio clips being classified with a high degree of trustiness by a certain audio class classifying rule can be automatically determined with ease.

By using the acoustic characteristics of the audio signals included in said audio clips, a training signal particular suitable for the respective audio class classifying rule is provided.

Thus, the inventive apparatus for classifying audio signals automatically generates its own training signals for the audio class classifying rules based on the audio signals currently processed.

Since said training signals for the audio class classifying rules are generated based on the currently processed audio signal, said training signals allow adaptation of the audio class classifying rules to audio signals of any category or programme.

Due to the automatic training capability of the inventive apparatus for classifying audio signals all possible peculiarities of audio signals of different programmes and different categories sufficiently are accounted for. Therefore, audio signals belonging to any category or programme can be classified with a good average performance.

Furthermore, the determination process to find acceptable audio class classifying rules is significantly facilitated since said audio class classifying rules are trained by the automatically generated training signals.

According to a preferred embodiment of the present invention, the classifying apparatus further comprises segmentation means for segmenting the classified audio signals into individual sequences of cohesive audio clips based on predetermined content classifying rules by analysing a sequence of audio classes of cohesive audio clips provided by the class discrimination means, wherein each sequence of cohesive audio clips segmented by the segmentation means corresponds to a content included in the audio signals. Furthermore, the segmentation means calculates a content confidence value for each content assigned to a sequence of cohesive audio clips, wherein the content confidence value indicates the likelihood the respective content characterises the respective sequence of cohesive audio clips correctly. Moreover, the segmentation means uses sequences of cohesive audio clips having a high content confidence value to train the respective content classifying rule.

This preferred embodiment bases on the use of content classifying rules allocating a certain sequence of audio classes of consecutive audio clips to a certain content (self-contained activity included in a certain programme having a minimum importance) included in the audio signal of said sequence of audio clips.

According to this embodiment a content confidence value is calculated by the segmentation means for each segmented sequence of audio classes of consecutive audio clips.

Since the segmentation of sequences of audio classes of consecutive audio clips into contents is performed by using content classifying rules, the content confidence value can be calculated for each content classifying rule with respect to each sequence of audio classes of consecutive audio clips.

A simple way for calculating said content confidence value would be to determine the proportion of parameters of each content classifying rule met by the respective sequence of audio classes of consecutive audio clips, for example.

Said content confidence value indicates the probability of a correct allocation of a sequence of audio classes of consecutive audio clips to a content.

Thus, sequences of audio classes of consecutive audio clips which are segmented with a high degree of trustiness by a certain content classifying rule automatically can be determined with ease.

By using said sequences of audio classes of consecutive audio clips, a particular suitable training signal for the respective content classifying rule can be provided.

Thus, the inventive apparatus for classifying audio signals additionally generates its own training signals for the content classifying rules based on the audio signals currently processed.

Since said training signals for the content classifying rules are generated based on the currently processed audio signal, said training signals allow an adaptation of the content classifying rules to audio signals of any category or programme.

Therefore, audio signals belonging to any category or programme reliably can be segmented with a good average performance.

Furthermore, the determination process to find acceptable content classifying rules is significantly facilitated since said content classifying rules are trained by the automatically generated training signals.

If the classifying rules comprise Neuronal Networks it is preferred that weights used in the Neuronal Networks are updated to train the Neuronal Networks.

Furthermore, in case the classifying rules comprise Gaussian Mixture Models it is profitable that parameters for maximum likelihood linear regression transformation and/or Maximum a Posteriori used in the Gaussian Mixture Models are adjusted to train the Gaussian Mixture Models.

Moreover, in case the classifying rules comprise decision trees it is favoured that questions related to event duration at each leaf node used in the decision trees are adjusted to train the decision trees.

In case the classifying rules comprise hidden Markov models it is preferred that prior probabilities of a particular audio class given a number of last audio classes and/or transition probabilities used in the hidden Markov models are adjusted to train the hidden Markov models.

Therefore, various types of classifying rules suitable for audio class classifying rules and/or content classifying rules can be trained by the inventive classifying apparatus by adapting/adjusting conventional parameters.

Favourably the inventive apparatus for classifying audio signals further comprises first user input means for manual segmentation of the audio signals into individual sequences of cohesive audio clips and manual allocation of a corresponding content, wherein the segmentation means uses manually segmented audio signals to train the respective content classifying rules.

Moreover, it is beneficial if the inventive apparatus for classifying audio signals further comprises second user input means for manual discrimination of the audio clips into corresponding audio classes, wherein the class discrimination means uses said manually discriminated audio clips to train the respective audio class classifying rules.

Thus, even in case automatic generation of training data fails since a very special type of audio signal is processed, training of the content classifying rules and/or audio class classifying rules still is possible.

Moreover, use of manually segmented / discriminated audio signals for training purposes of the classifying rules further improves the performance of the respective classifying rules since even exceptional peculiarities of audio signals can be accounted for.

Preferably, the acoustic characteristics comprise bandwidth and/or zero cross rate and/or volume and/or sub-band energy rate and/or mel-cepstral components and/or frequency centroid and/or subband energies and/or pitch period of the respective audio signals.

Reliable detection of said acoustic characteristics within audio signals can be performed with ease.

Furthermore, said acoustic characteristics allow a sure discrimination of the audio signals comprised in an audio clip into audio classes based on audio class classifying rules.

Advantageously a predetermined audio class classifying rule is provided for each silence, speech, music, cheering and clapping.

Said audio classes can be detected with a high accuracy based on acoustic characteristics included in an audio signal.

Moreover, said audio classes allow a segmentation of sequences of audio classes into contents based on content classifying rules with high reliability.

Furthermore, it is preferred that the audio signals are part of a video data file, the video data file being composed of at least an audio signal and a picture signal.

Additionally, it is beneficial that the segmentation means identifies a sequence of commercials in the audio signals by analysing the contents of the audio signals and uses a sequence of cohesive audio clips preceding and/or following the sequence of commercials to train the respective content classifying rule.

With audio signals (e.g. extracted from radio or tv-broadcasting) it is very common that commercials are placed immediately before and/or after contents of exceptional interest.

Therefore, by identifying a sequence of commercials in the audio signals and using a sequence of cohesive audio clips preceding or following the sequence of commercials to train the respective content classifying rule a content classifying rule automatically identifying contents of exceptional interest in the respective audio signal can be generated.

A method for classifying audio signals according to the present invention comprises the following steps:
- partitioning audio signals into audio clips;
- discriminating the audio clips into predetermined audio classes based on predetermined audio class classifying rules by analysing acoustic characteristics of the audio signals comprised in the audio clips, wherein a predetermined audio class classifying rule is provided for each audio class and each audio class represents a respective kind of audio signals comprised in the corresponding audio clip;
- calculating an audio class confidence value for each audio class assigned to an audio clip, wherein the audio class confidence value indicates the likelihood the respective audio class characterises the respective kind of audio signals comprised in the respective audio clip correctly; and
- using acoustic characteristics of audio clips of audio classes having a high audio class confidence value to train the respective audio class classifying rules.

According to a preferred embodiment of the present invention the method further comprises the steps of:
- segmenting the classified audio signals into individual sequences of cohesive audio clips based on predetermined content classifying rules by analysing a sequence of audio classes of cohesive audio clips, wherein each sequence of cohesive audio clips corresponds to a content included in the audio signals;
- calculating a content confidence value for each content assigned to a sequence of cohesive audio clips, wherein the content confidence value indicates the likelihood, the respective content characterises the respective sequence of cohesive audio clips correctly; and
- using sequences of cohesive audio clips having a high content confidence value to train the respective content classifying rules.

Advantageously, the method further comprises the steps of:
- using Neuronal Networks as classifying rules; and
- updating weights used in the Neuronal Networks to train the Neuronal Networks.

Preferably, the method further comprises the steps of:
- using Gaussian Mixture Models as classifying rules; and
- adapting parameters for maximum likelihood linear regression transformation and/or Maximum a Posteriori used in the Gaussian Mixture Models to train the Gaussian Mixture Models.

It is further preferred that the method comprises the steps of:
- using decision trees as classifying rules; and
- adapting questions related to event duration at each leaf node used in the decision trees to train the decision trees.

Moreover, it is beneficial that the method further comprises the steps of:
- using hidden Markov models as classifying rules; and
- adapting prior probabilities of a particular audio class given a number of last audio classes and/or transition probabilities used in the hidden Markov models to train the hidden Markov models.

Profitably, the method further comprises the step of:
- using audio signals which are segmented manually into individual sequences of cohesive audio clips and allocated manually to a corresponding content to train the respective content classifying rules.

Furthermore, it is preferred that the method additionally comprises the step of:
- using audio clips which are discriminated manually into corresponding audio classes to train the respective audio class classifying rules.

Moreover, it is beneficial if the method further comprises the steps of:
- identifying a sequence of commercials in the audio signals by analysing the contents of the audio signals; and
- using a sequence of cohesive audio clips preceding or following the sequence of commercials to train the respective content classifying rule.

The present invention is further directed to a software product comprising a series of state elements which are adapted to be processed by a data processing means of a mobile terminal such, that a method according to one of the claims 13 to 21 may be executed thereon.

In the following detailed description, the present invention is explained by reference to the accompanying drawings, in which like reference characters refer to like parts throughout the views, wherein:
- Fig. 1: shows a block diagram of an apparatus for classifying audio signals according to a first preferred embodiment of the present invention;
- Fig. 2: shows a method for classifying audio signals according to the present invention based on a schematic diagram;
- Fig. 3: shows a block diagram of an apparatus for classifying audio signals according to a second embodiment of the present invention;
- Fig. 4: shows a block diagram of a segmentation apparatus according to the prior art; and
- Fig. 5: schematically shows the effect the segmentation apparatus according to the prior art has on audio signals.

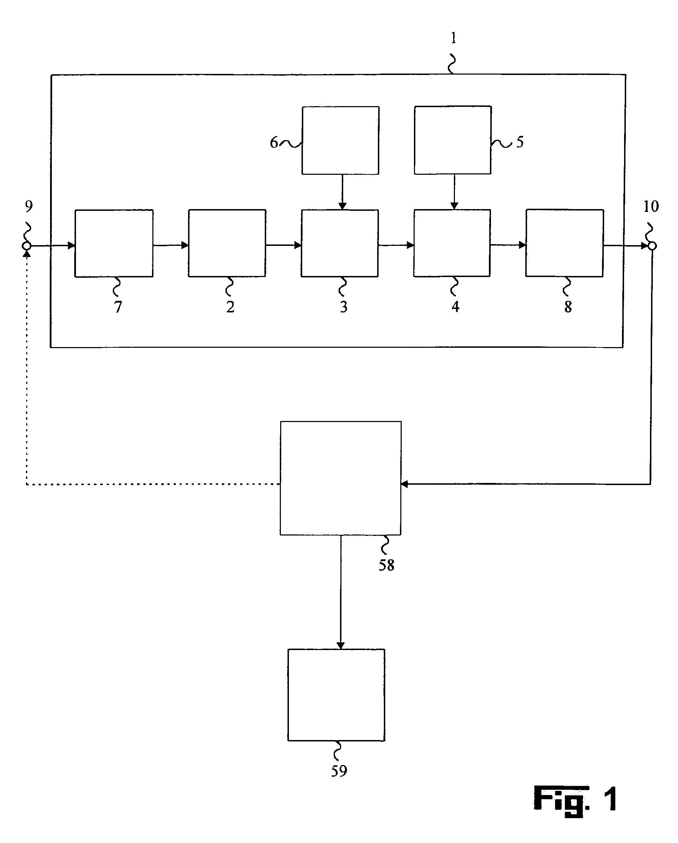

Fig. 1 shows an apparatus for classifying audio signals according to a first preferred embodiment of the present invention.

According to this first preferred embodiment, the apparatus for classifying audio signals 1 is included into a digital video recorder which is not shown in the figures.

Alternatively, the apparatus for classifying audio signals might be included in a different digital audio / video apparatus, such as a personal computer or workstation or might even be provided as a separate equipment.

The apparatus for classifying audio signals 1 comprises signal input means 7 for supplying signals via a signal entry port 9.

In the present example the signal provided to the signal entry port 9 is a digital video data file which is stored on a hard disc 58 of the digital video recorder. The digital video data file is composed of at least an audio signal and a picture signal.

Alternatively, the signal provided to the signal entry port 9 might be a real time video signal of a conventional television channel.

The signal input means 7 converts the signals provided to the signal entry port 9 into a suitable format.

An audio signal comprised in the digital video data file provided to the signal entry port 9 is readout by the signal input means 7 and transmitted to audio signal clipping means 2.

The audio signal clipping means 2 partitions said audio signals into audio clips.

It is important to emphasise that the audio signal clipping means 2 do not subdivide the audio signals into audio clips in a literal sense but define segments of audio signals comprising a suitable amount of audio signals within the audio signals, only.

In the present example, the audio signal clipping means 2 generates a meta data file defining segments of audio signals of a predetermined length within the audio signals while the audio signals themselves remain unamended. In the following, said segments of audio signals are referred to as "audio clips".

Alternatively, each audio clip might comprise a variable amount of audio signals. Thus, the audio clips might have a variable length.

It is evident for a man skilled in the art that the audio signals comprised in each clip might be further divided into a plurality of frames of e.g. 512 samples. In this case it is profitable if consecutive frames are shifted by 180 samples with respect to the respective antecedent frame. This subdivision allows an precise and easy processing of the audio signals comprised in each audio clip.

The audio clips supplied by the audio signal clipping means 2 are further transmitted to class discrimination means 3.

Acoustic characteristics of the audio signals comprised in the audio clips are analysed by the class discrimination means 3.

In the present embodiment, said acoustic characteristics comprise bandwidth, zero cross rate, volume, sub-band energy rate, mel-cepstral components, frequency centroid, subband energies and pitch period of the audio signals comprised in the respective audio clips.

Analysis of said acoustic characteristics can be performed by any conventional method. Moreover, said acoustic characteristics allow a sure discrimination of the audio signals comprised in an audio clip into audio classes based on audio class classifying rules.

Thus, by using predetermined audio class classifying rules the audio clips are discriminated into predetermined audio classes by the class discrimination means 3 based on the acoustic characteristics comprised in the respective audio clips.

Said predetermined audio class classifying rules which are stored in the class discrimination means 3 are provided for each audio class, wherein each audio class represents a respective kind of audio signals comprised in the corresponding audio clip.

Thus, the audio class classifying rules allocate a certain combination of given acoustic characteristics of each audio clip to a certain kind of audio signals.

The function of the audio class classifying rules will become more apparent by the following example:

The acoustic characteristics for an audio class classifying rule identifying the kind of audio signals "silence" might be "low energy level" and "low zero cross rate" of the audio signals comprised in the respective audio clip.

Thus, in case an audio clip comprising audio signals with a low energy level and low zero cross rate is discriminated by the class discrimination means 3 the audio class "silence" will be allocated to said audio clip.

In the present embodiment a predetermined audio class classifying rule for each silence, speech, music, cheering and clapping is provided. Said audio classes can be detected with high accuracy and allow a reliable segmentation of correspondingly classified audio data. Alternatively, further audio classes e.g. noise or male / female speech might be determined.

Said audio class classifying rules are generated by empiric analysis of manually classified audio signals and are stored in the class discrimination means 3.

According to the present invention the class discrimination means 3 further calculates an audio class confidence value for each audio class assigned to an audio clip.

Said audio class confidence value indicates the likelihood the respective audio class characterises the respective kind of audio signals comprised in the respective audio clip correctly.

In the present embodiment, said audio class confidence value is calculated by determining the proportion of parameters of each audio class classifying rule met by the respective audio signal of the respective audio clip.

The calculation of the audio class confidence value will become more apparent by the following example:

Once again, the acoustic characteristics for the audio class classifying rule identifying the audio class "silence" might be "low energy level" and "low zero cross rate" of the audio signals comprised in the respective audio clip.

In case the audio class for "silence" is allocated to an audio clip comprising audio signals with a low energy level and low zero cross rate by the class discrimination means 3, the audio class confidence value for the audio class classifying rule will be 100%.

To the contrary, in case the audio class for "silence" is allocated to an audio clip comprising audio signals with a low energy level and a high zero cross rate by the class discrimination means 3, the audio class confidence value for the audio class classifying rule will be 50%, only.

Thus, said audio class confidence value indicates the probability of a correct discrimination of an audio clip into an audio class.

Therefore, audio clips which are classified with a high degree of trustiness by a certain audio class classifying rule are determined.

Furthermore, by using acoustic characteristics of audio clips of audio classes having a high audio class confidence value the class discrimination means 3 trains the respective audio class classifying rule.

In the present embodiment the audio class classifying rules comprise Neuronal Networks.

Said Neuronal Networks are trained by the class discrimination means 3 by updating weights used in the Neuronal Networks based on the acoustic characteristics of audio clips of audio classes having a high audio class confidence value.

Alternatively, in case the audio class classifying rules comprise Gaussian Mixture Models it is profitable that parameters for maximum likelihood linear regression transformation and/or Maximum a Posteriori used in the Gaussian Mixture Models are adjusted to train the Gaussian Mixture Models.

Further alternatively, in case the audio class classifying rules comprise decision trees it is favoured that questions related to event duration at each leaf node used in the decision trees are adjusted to train the decision trees.

According to a further alternative, the audio class classifying rules comprise hidden Markov models. In this case it is preferred that prior probabilities of a particular audio class given a number of last audio classes and/or transition probabilities used in the hidden Markov models are adjusted to train the hidden Markov models.

Therefore, various types of classifying rules suitable for audio class classifying rules and/or content classifying rules can be trained by the inventive classifying apparatus 1 by adapting/adjusting conventional parameters.

It is evident for a man skilled in the art that the present invention is not limited to the above classifying rules but any classifying rule comprising training capabilities (e.g. by adjusting parameters) might be used.

After discrimination into audio classes by the class discrimination means 3, the classified audio clips are transmitted to a segmentation means 4.

Said segmentation means 4 segments the audio signals into individual sequences of cohesive audio clips based on predetermined content classifying rules by analysing a sequence of audio classes of cohesive (consecutive) audio clips provided by the class discrimination means 3. Each sequence of cohesive audio clips segmented by the segmentation means corresponds to a content included in the audio signals.

Contents are self-contained activities comprised in the audio signals of a certain programme which meet a certain minimum importance.

The length of time of the contents comprised in the audio signals of a programme usually differs. Thus, each contents comprises a certain number of cohesive audio clips.

If the programme is news, for example, the contents are the different notices mentioned in the news. If the programme is football, for example, said contents are kick-off, penalty kick, throw-in, goal, etc..

As said before, the contents comprised in the audio signal are composed of a sequence of consecutive audio clips, each. Since each audio clip is discriminated into an audio class each content is composed of a sequence of corresponding audio classes of consecutive the audio clips, too.

Therefore, by comparing the sequences of audio classes of consecutive audio clips which belong to the contents of the respective audio signal with the sequences of audio classes of consecutive audio clips which belong to the content classifying rules it is possible to find content classifying rules which are adapted to identify the respective content.

The function of the content classifying rules will become more apparent by the following example:

The sequence of audio classes of cohesive audio clips for the content classifying rule identifying the content "goal" might be "speech", "silence", "cheering/clapping" and "silence".

Thus, in case the sequence of audio classes of cohesive audio clips "speech", "silence", "cheering/clapping" and "silence" is to be segmented by the segmentation means 4, the content "goal" will be allocated to said sequence of audio clips.

According to this preferred embodiment, the segmentation means 4 further calculates a content confidence value for each content assigned to a sequence of cohesive audio clips. Said content confidence value indicates the likelihood, the respective content characterises the respective sequence of cohesive audio clips correctly.

Furthermore, the segmentation means uses sequences of cohesive audio clips having a high content confidence value to train the respective content classifying rule.

In the present embodiment the content confidence value is calculated by the segmentation means 4 for each content classifying rule with respect to each sequence of audio classes of consecutive audio clips by counting how many characteristics of the respective content classifying rule are fully met by the respective sequence of audio classes of consecutive audio clips. Thus, said content confidence value indicates the probability of a correct allocation of a sequence of audio classes of consecutive audio clips to a content.

By using sequences of audio classes of consecutive audio clips which are segmented with a high degree of trustiness by a certain content classifying rule, a particularly suitable training signal for the respective content classifying rule is provided by the segmentation means 4 of the inventive audio classifying apparatus 1.

Thus, the inventive apparatus for classifying audio signals generates its own training signals for both the respective audio class classifying rules and the respective content classifying rules based on the audio signals currently processed.

Since said training signals for the audio class classifying rules and the content classifying rules are generated based on the currently processed audio signal, said training signals allow an adaptation of the audio class classifying rules and the content classifying rules to audio signals of any category or programme.

Due to this automatic training capability of the inventive apparatus for classifying audio signals 1, all possible peculiarities of audio signals of different programmes and different categories is sufficiently accounted for. Therefore, audio signals belonging to any category or programme reliably can be classified and segmented with a good average performance.

Furthermore, the determination process to find acceptable audio class classifying rules and content classifying rules is significantly facilitated since said audio class classifying rules and said content classifying rules automatically are trained by the automatically generated training signals, respectively.

According to this preferred embodiment, the apparatus for classifying audio signals 1 further comprises first user input means 5 and second user input means 6.

The first user input means 5 are connected to the segmentation means 4 while the second user input means 6 are connected to the class discrimination means 3.

Both the first and second user input means 5 comprise a keyboard or a touchscreen (not shown).

Alternatively, one common keyboard or touchscreen might be used for the first and second user input means.

The first user input means 5 allows manual segmentation of the audio signals into individual sequences of cohesive audio clips and manual allocation of a corresponding content, wherein the segmentation means 4 use said manually segmented audio signals to train the respective content classifying rules.

The second user input means 6 is provided for manual discrimination of the audio clips into corresponding audio classes, wherein the class discrimination means 3 uses said manually discriminated audio clips to train the respective audio class classifying rules.

Thus, even in case automatic generation of training data fails since a very special type of audio signal is processed, training of the content classifying rules and/or audio class classifying rules still is possible.

Moreover, use of manually segmented/discriminated audio signals for training purposes of the classifying rules further improves the performance of the respective classifying rules since even exceptional peculiarities of audio signals can be accounted for.

Output file generation means 8 comprising an output port 10 is connected to the segmentation means 4.

The output file generation means 8 generates an output file containing both the audio signal supplied to the signal input means 7 and data relating to the begin time, the end time and the contents of a self-contained event comprised in the audio signals.

Furthermore, the output file generation means 8 stores the output file via the output port 10 into the hard disc 58 of the digital video recorder.

Alternatively, the output file might be written to a DVD by a DVD-writer, for example.

Alternatively, said hard disc 58 might be part of a a personal computer, for example.

In the present embodiment, the hard disc 58 is further connected to a playback means 59 of the digital video recorder which plays back the output file stored in the hard disc 58.

According to the first embodiment, separate microcomputers are used for the signal input means 7, the audio signal clipping means 2, the class discrimination means 3, the segmentation means 4 and the output file generation means 8.

Alternatively, one common microcomputers might be used for the signal input means 7, the audio signal clipping means 2, the class discrimination means 3, the segmentation means 4 and the output file generation means 8.

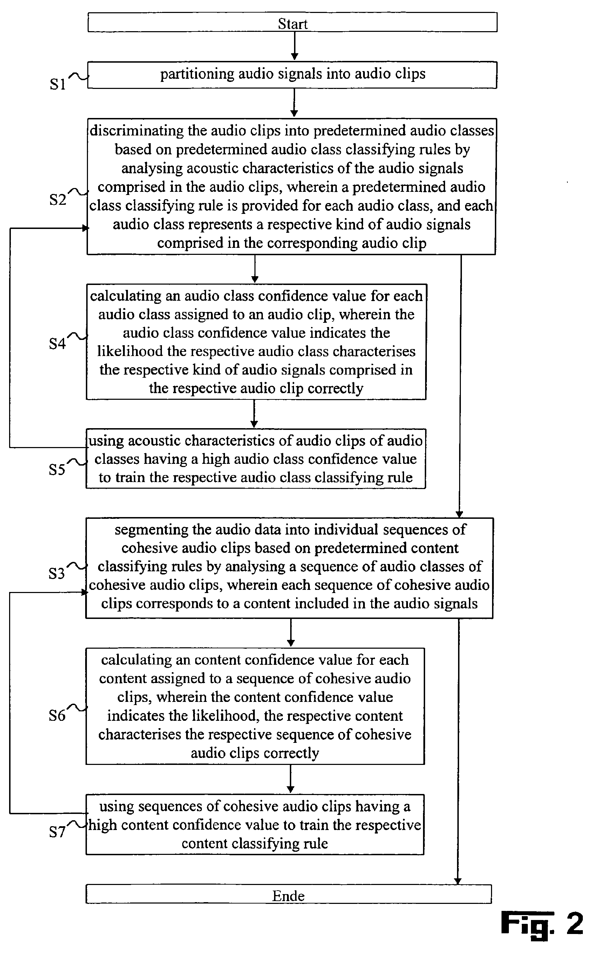

Fig. 2 shows the function of a method for classifying audio signals according to the present invention based on a schematic diagram.

Since said method can be performed by the apparatus for classifying audio signals according to the above first preferred embodiment of the present invention, reference is made to both Figs. 1 and 2.

In a first step S1 raw audio signals are partitioned into audio clips by the signal clipping means 2.

In step S2 the audio clips are discriminated into predetermined audio classes based on predetermined audio class classifying rules by analysing acoustic characteristics of the audio signals comprised in the audio clips, wherein a predetermined audio class classifying rule is provided for each audio class and each audio class represents a respective kind of audio signals comprised in the corresponding audio clip.

Afterwards, in step S3 the audio signals are segmented into individual sequences of cohesive audio clips based on predetermined content classifying rules by analysing a sequence of audio classes of cohesive audio clips, wherein each sequence of cohesive audio clips corresponds to a content included in the audio signals.

In the meantime, in step S4 an audio class confidence value is calculated for each audio class assigned to an audio clip, wherein the audio class confidence value indicates the likelihood the respective audio class characterises the respective kind of audio signals comprised in the respective audio clip correctly.

In the following step S5 acoustic characteristics of audio clips of audio classes having a high audio class confidence value are used to train the respective audio class classifying rule. Additionally, audio clips which are discriminated manually into corresponding audio classes are used to train the respective audio class classifying rules.

Steps S2, S4 and S5 are performed by the class discrimination means 3.

Parallel to step S3, a content confidence value for each content assigned to a sequence of cohesive audio clips is calculated in step S6, wherein the content confidence value indicates the likelihood, the respective content characterises the respective sequence of cohesive audio clips correctly.

After the content confidence value has been calculated, sequences of cohesive audio clips having a high content confidence value are used in step S7 to train the respective content classifying rule. Audio signals which are segmented manually into individual sequences of cohesive audio clips and allocated manual to a corresponding content are additionally used to train the respective content classifying rules.

Steps S3, S6 and S7 are performed by the segmentation means 4.

Neuronal Networks, Gaussian Mixture Models, decision trees or hidden Markov models might be used in steps S2 and S3 as audio class classifying rules and contents classifying rules, respectively.

Correspondingly, updating weights used in the Neuronal Networks, parameters for maximum likelihood linear regression transformation and/or Maximum a Posteriori used in the Gaussian Mixture Models, questions related to event duration at each leaf node used in the decision trees or prior probabilities of a particular audio class given a number of last audio classes and/or transition probabilities used in the hidden Markov models might be adjusted to train the respective classifying rule in step S5 and S7, respectively.

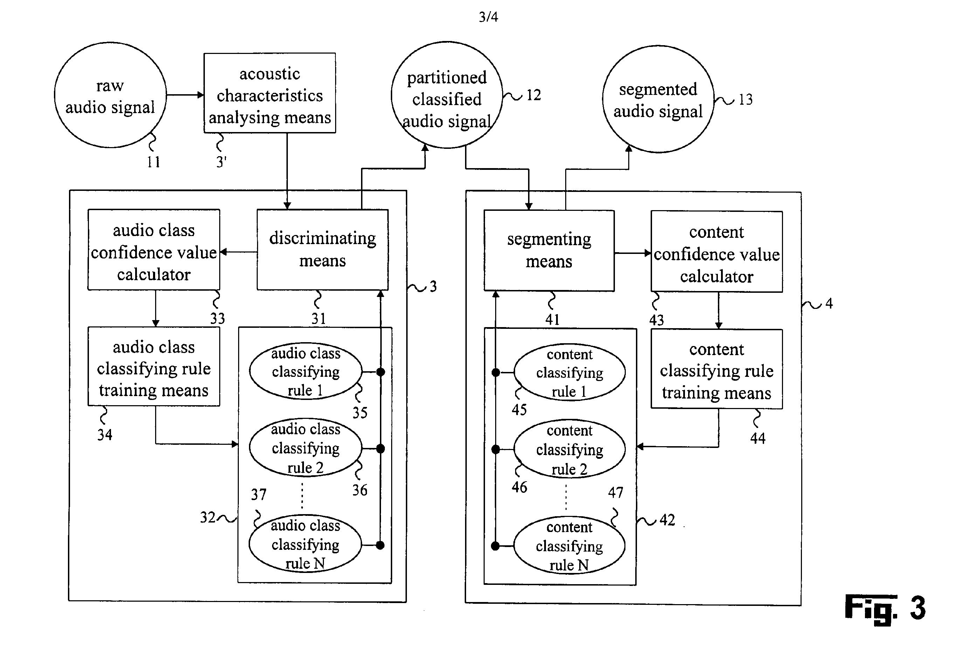

Fig. 3 shows an apparatus for classifying audio signals according to a second embodiment of the present invention.

The apparatus for classifying audio signals according to the second embodiment differs from the first embodiment firstly in that a separate microcomputer is provided to realise acoustic characteristics analysing means 3'.

The acoustic characteristics analysing means 3' performs the above method step S1 and thus clips the raw audio signal 11 into audio clips. Furthermore, the acoustic characteristics analysing means 3' analyses acoustic characteristics of the raw audio signals 11 comprised in the audio clips.

Thus, in the present embodiment analysis of acoustic characteristics in the audio signals is not performed by the class discrimination means 3 but by the acoustic characteristics analysing means 3'.

As it is shown in Fig. 3, the class discrimination means 3 comprises discriminating means 31, an audio class confidence value calculator 33, audio class classifying rule training means 34 and an audio class classifying rule storage means 32.

The discriminating means 31 discriminates the audio clips provided by the acoustic characteristics analysing means 3' into predetermined audio classes based on predetermined audio class classifying rules 35, 36, 37 which are stored in the audio class classifying rule storage means 32.

In the present embodiment, separate sets of audio class classifying rules 35, 36, 37 are provided for different programmes comprised in the raw audio signals 11. Each set of audio class classifying rules 35, 36, 37 is specialised for a certain programme.

The audio class confidence value calculator 33 calculates an audio class confidence value for each audio class assigned to an audio clip.

By using acoustic characteristics of audio clips of audio classes having a high audio class confidence value the audio class classifying rule training means 34 trains the respective audio class classifying rule 35 used for discriminating the respective audio clip. Said training is performed by adjusting parameters of the respective audio class classifying rule 35.

A partitioned and classified audio signal 12 is output by the discrimination means 3.

In the present example, said partitioned and classified audio signal 12 is buffered into a hard disc (not shown) for further processing. Alternatively, said partitioned and classified audio signal might immediately be provided to a segmentation means 4.

The segmentation means 4 comprises segmenting means 41, a content confidence value calculator 43, content classifying rule training means 44 and a content classifying rule storage means 42.

The segmenting means 41 segments the partitioned and classified audio signal 12 into individual sequences of cohesive audio clips based on predetermined content classifying rules 45, 46, 47 which are stored in the content classifying rule storage means 42.

In the present embodiment, separate sets of content classifying rules 45, 46, 47 are provided for partitioned and classified audio signals 12 resulting from raw audio signals 11 of different programmes. Each set of content classifying rules 45, 46, 47 is specialised for a certain programme.

The content confidence value calculator 43 calculates a content confidence value for each sequence of cohesive audio clips assigned to a content.

By using sequences of cohesive audio clips having a high content confidence value, the content classifying rule training means 44 trains the respective content classifying rule 45 which was used for discriminating the respective sequence of cohesive audio clips. Said training is performed by adjusting parameters of the respective content classifying rule 45.

The correspondingly segmented audio signal 13 is output by the segmentation means 4. In the present embodiment, said segmented audio signal 13 is stored separately from a corresponding video signal to a hard disc (not shown).

Thus, according to the second embodiment of the present invention, the apparatus for classifying audio signals automatically generates both its own training signals for the audio class classifying rules 35, 36 and 37 and the content classifying rules 45, 46 and 47 based on currently processed audio signals in line with the output of the audio class confidence value calculator 33 and the content confidence value calculator 43, respectively.

According to this second embodiment of the present invention, the content confidence value calculator 43 of the segmentation means 4 is further adapted to identify a sequence of commercials in the partitioned and classified audio signal 12 by analysing the contents of the respective audio signal.

In case a sequence of commercials automatically is detected by the content confidence value calculator 43 or manually identified (and input) by a user, the content classifying rule training means 44 uses a sequence of cohesive audio clips preceding and/or following the sequence of commercials to train the respective content classifying rule used for segmenting the respective sequence of cohesive audio clips.

This additional feature of the segmentation means 4 bases on the fact that commercials usually are placed immediately before and/or after contents of exceptional interest.

Therefore, by identifying a sequence of commercials in the audio signals and using a sequence of cohesive audio clips preceding and/or following the sequence of commercials to train the respective content classifying rule, a content classifying rule identifying contents of exceptional interest in the respective audio signal automatically can be generated.

It is evident that the detection of a sequence of commercials in the partitioned and classified audio signal 12 alternatively might be performed by the segmenting means 41 or even by a separate element or by a user.

In the present embodiment, separate microcomputer are provided for the acoustic characteristics analysing means 3', the discriminating means 31, the audio class confidence value calculator 33 and the audio class classifying rule training means 34.

Alternatively, one common microcomputer might be used for the acoustic characteristics analysing means 3', the discriminating means 31, the audio class confidence value calculator 33 and the audio class classifying rule training means 34.

Furthermore, in the second embodiment separate microcomputer are provided for the segmenting means 41, the content confidence value calculator 43 and the content classifying rule training means 44.

Alternatively, one common microcomputer might be used for the segmenting means 41, the content confidence value calculator 43 and the content classifying rule training means 44.

Moreover, separated EEPROMs are provided according to this second embodiment for the audio class classifying rule storage means 32 and the content classifying rule storage means 42.

Alternatively, separated FLASH-memories or one common hard disc might be used for the audio class classifying rule storage means 32 and the content classifying rule storage means 42.

To enhance clarity of the Figs. 1 and 3 supplementary means as power supply, buffer memories etc. are not shown.

Both, the inventive apparatus for classifying audio signals according to the first and second embodiment might be realised by use of a personal computer or workstation.

According to a third embodiment of the present invention (which is not shown in the figures), the above object is solved by a software product comprising a series of state elements which are adapted to be processed by a data processing means of a mobile terminal such, that a method according to one of the claims 13 to 21 may be executed thereon.

By automatically generating its own training signals for the audio class classifying rules and the content classifying rules based on the audio signals currently processed the inventive apparatus and method for classifying audio signals allow an adaptation of the audio class classifying rules and the content classifying rules to audio signals of any category or programme.

Thus, all possible peculiarities of audio signals of different programmes and different categories are sufficiently accounted for. Therefore, audio signals belonging to any category or programme reliably can be classified with a good average performance.

Furthermore, the determination process to find acceptable audio class classifying rules and content classifying rules is significantly facilitated since said audio class classifying rules and said content classifying rules automatically can be trained by the automatically generated training signals.

## Claims

1. Apparatus for classifying audio signals (1) comprising:
- audio signal clipping means (2) for partitioning audio signals (11) into audio clips; and
- class discrimination means (3) for discriminating the audio clips provided by the audio signal clipping means (2) into predetermined audio classes based on predetermined audio class classifying rules (35, 36, 37) by analysing acoustic characteristics of the audio signals comprised in the audio clips, wherein a predetermined audio class classifying rule (35, 36, 37) is provided for each audio class, and each audio class represents a respective kind of audio signals comprised in the corresponding audio clip;
**characterised in that**
the class discrimination means (3) calculates an audio class confidence value for each audio class assigned to an audio clip, wherein the audio class confidence value indicates the likelihood the respective audio class characterises the respective kind of audio signals comprised in the respective audio clip correctly; and
the class discrimination means (3) uses acoustic characteristics of audio clips of audio classes having a high audio class confidence value to train the respective audio class classifying rule (35, 36, 37).

2. Apparatus for classifying audio signals (1) according to claim 1,
**characterised in that** the classifying apparatus further comprises
- segmentation means (4) for segmenting classified audio signals (12) into individual sequences of cohesive audio clips based on predetermined content classifying rules (45, 46, 47) by analysing a sequence of audio classes of cohesive audio clips provided by the class discrimination means (3), wherein each sequence of cohesive audio clips segmented by the segmentation means (4) corresponds to a content included in the audio signals; wherein
the segmentation means (4) calculates a content confidence value for each content assigned to a sequence of cohesive audio clips, wherein the content confidence value indicates the likelihood the respective content characterises the respective sequence of cohesive audio clips correctly; and
the segmentation means (4) uses sequences of cohesive audio clips having a high content confidence value to train the respective content classifying rule (45, 46, 47).

3. Apparatus for classifying audio signals (1) according to claim 1 or 2,
**characterised in that**
the classifying rules (35, 36, 37, 45, 46, 47) comprise Neuronal Networks; and weights used in the Neuronal Networks are updated to train the Neuronal Networks.

4. Apparatus for classifying audio signals (1) according to one of the preceding claims,
**characterised in that**
the classifying rules (35, 36, 37, 45, 46, 47) comprise Gaussian Mixture Models; and
parameters for maximum likelihood linear regression transformation and/or Maximum a Posteriori used in the Gaussian Mixture Models are adjusted to train the Gaussian Mixture Models.

5. Apparatus for classifying audio signals (1) according to one of the preceding claims,
**characterised in that**
the classifying rules (35, 36, 37, 45, 46, 47) comprise decision trees; and questions related to event duration at each leaf node used in the decision trees are adjusted to train the decision trees.

6. Apparatus for classifying audio signals (1) according to one of the preceding claims,
**characterised in that**
the classifying rules (35, 36, 37, 45, 46, 47) comprise hidden Markov models; and prior probabilities of a particular audio class given a number of last audio classes and/or transition probabilities used in the hidden Markov models are adjusted to train the hidden Markov models.

7. Apparatus for classifying audio signals (1) according to one of the preceding claims,
**characterised in that** the classifying apparatus further comprises:
- first user input means (5) for manual segmentation of the audio signals into individual sequences of cohesive audio clips and manual allocation of a corresponding content;
wherein the segmentation means (4) uses manually segmented audio signals to train the respective content classifying rules (45, 46, 47).

8. Apparatus for classifying audio signals (1) according to one of the preceding claims,
**characterised in that** the classifying apparatus further comprises:
- second user input means (6) for manual discrimination of the audio clips into corresponding audio classes;
wherein the class discrimination means (3) uses said manually discriminated audio clips to train the respective audio class classifying rules (35, 36, 37).

9. Apparatus for classifying audio signals (1) according to one of the preceding claims,
**characterised in that**
the acoustic characteristics comprise bandwidth and/or zero cross rate and/or volume and/or sub-band energy rate and/or mel-cepstral components and/or frequency centroid and/or subband energies and/or pitch period of the respective audio signals.

10. Apparatus for classifying audio signals (1) according to one of the preceding claims,
**characterised in that**
a predetermined audio class classifying rule is provided for each silence, speech, music, cheering and clapping.

11. Apparatus for classifying audio signals (1) according to one of the preceding claims,
**characterised in that**
the audio signals are part of a video data file, the video data file being composed of at least an audio signal and a picture signal.

12. Apparatus for classifying audio signals (1) according to one of the preceding claims,
**characterised in that**
the segmentation means (4) identifies a sequence of commercials in the audio signals by analysing the contents of the audio signals and uses a sequence of cohesive audio clips preceding and/or following the sequence of commercials to train the respective content classifying rules (45, 46, 47).

13. Method for classifying audio signals comprising the following steps:
- (S1) partitioning audio signals (11) into audio clips; and
- (S2) discriminating the audio clips into predetermined audio classes based on predetermined audio class classifying rules (35, 36, 37) by analysing acoustic characteristics of the audio signals comprised in the audio clips, wherein a predetermined audio class classifying rule is provided for each audio class and each audio class represents a respective kind of audio signals comprised in the corresponding audio clip;
**characterised in that** the method further comprises the steps of:
- (S4) calculating an audio class confidence value for each audio class assigned to an audio clip, wherein the audio class confidence value indicates the likelihood the respective audio class characterises the respective kind of audio signals comprised in the respective audio clip correctly; and
- (S5) using acoustic characteristics of audio clips of audio classes having a high audio class confidence value to train the respective audio class classifying rules (35, 36, 37).

14. Method for classifying audio signals according to claim 13,
**characterised in that** the method further comprises the steps of:
- (S3) segmenting the classified audio signals (12) into individual sequences of cohesive audio clips based on predetermined content classifying rules (45, 46, 47) by analysing a sequence of audio classes of cohesive audio clips, wherein each sequence of cohesive audio clips corresponds to a content included in the audio signals;
- (S6) calculating a content confidence value for each content assigned to a sequence of cohesive audio clips, wherein the content confidence value indicates the likelihood, the respective content characterises the respective sequence of cohesive audio clips correctly; and
- (S7) using sequences of cohesive audio clips having a high content confidence value to train the respective content classifying rules (45, 46, 47).

15. Method for classifying audio signals according to claim 13 or 14,
**characterised in that** the method further comprises the steps of:
- using Neuronal Networks as classifying rules (35, 36, 37, 45, 46, 47); and
- updating weights used in the Neuronal Networks to train the Neuronal Networks.

16. Method for classifying audio signals (1) according to one of the claims 13, 14 or 15,
**characterised in that** the method further comprises the steps of:
- using Gaussian Mixture Models as classifying rules (35, 36, 37, 45, 46, 47); and
- adapting parameters for maximum likelihood linear regression transformation and/or Maximum a Posteriori used in the Gaussian Mixture Models to train the Gaussian Mixture Models.

17. Method for classifying audio signals (1) according to one of the claims 13 to 16,
**characterised in that** the method further comprises the steps of:
- using decision trees as classifying rules (35, 36, 37, 45, 46, 47); and
- adapting questions related to event duration at each leaf node used in the decision trees to train the decision trees.

18. Method for classifying audio signals (1) according to one of the claims 13 to 17,
**characterised in that** the method further comprises the steps of:
- using hidden Markov models as classifying rules (35, 36, 37, 45, 46, 47); and
- adapting prior probabilities of a particular audio class given a number of last audio classes and/or transition probabilities used in the hidden Markov models to train the hidden Markov models.

19. Method for classifying audio signals (1) according to one of the claims 13 to 18,
**characterised in that** the method further comprises the step of:
- using audio signals which are segmented manually into individual sequences of cohesive audio clips and allocated manually to a corresponding content to train the respective content classifying rules (45, 46, 47).

20. Method for classifying audio signals (1) according to one of the claims 13 to 19,
**characterised in that** the method further comprises the step of:
- using audio clips which are discriminated manually into corresponding audio classes to train the respective audio class classifying rules (35, 36, 37).

21. Method for classifying audio signals (1) according to one of the claims 13 to 20,
**characterised in that** the method further comprises the steps of:
- identifying a sequence of commercials in the audio signals by analysing the contents of the audio signals; and
- using a sequence of cohesive audio clips preceding and/or following the sequence of commercials to train the respective content classifying rules (45, 46, 47).

22. Software product comprising a series of state elements which are adapted to be processed by a data processing means of a mobile terminal such, that a method according to one of the claims 13 to 21 may be executed thereon.
